# EUROPÄISCHE PATENTSCHRIFT

(11) **EP 0 334 213 B1**
(45) Veröffentlichungstag und Bekanntmachung des Hinweises auf die Patenterteilung: **13.12.1995**
(21) Anmeldenummer: 89104736.7
(22) Anmeldetag: 16.03.1989
(51) Int. Cl.: G05D 11/13, B01F 15/04

(54) **Verfahren zur kontinuierlichen Herstellung eines fliessfähigen Gemisches**
Process for continuous preparation of fluid mixture
Procédé de préparation en continu d'un mélange fluide

(30) Priorität: 22.03.1988 CH 1086/88
(43) Veröffentlichungstag der Anmeldung: 27.09.1989
(73) Patentinhaber: Miteco AG, CH-4800 Zofingen (CH); Cadeo, Angelo, CH-4852 Rothrist (CH)
(72) Erfinder: Cadeo, Angelo, CH-4852 Rothrist (CH); Zellweger, Ruedi, CH-4800 Zofingen (CH)
(74) Vertreter: Blum, Rudolf Emil Ernst

(56) Entgegenhaltungen:
- WO-A-86/03235
- DE-C- 1 141 778
- FR-A- 2 224 808
- US-A- 4 209 258
- INSTRUMENTS AND CONTROL SYSTEMS. vol. 49, no. 10, Oktober 1976, RADNOR US Seiten 24-30;R.Mayer: "If you're looking for flexibility,this blending system has it"

## Beschreibung

Die vorliegende Erfindung betrifft ein Verfahren zur kontinuierlichen Herstellung eines aus mindestens zwei Komponenten gebildeten, fliessfähigen Gemisches, bei dem jede Komponente aus einem Lagerbehälter zugeführt und danach alle Komponenten miteinander vermischt werden.

Bei der Herstellung solcher fliessfähigen Gemische werden die einzelnen, allgemein flüssigen Komponenten aus ihrem jeweiligen Vorrats- bzw. Lagerbehältern herausgefördert, dosiert, wobei die jeweiligen Durchflussmengen einzeln geregelt und konstant gehalten werden. Dazu sind Pumpvorrichtungen, Mengenstrommessgeräte, Regler usw. eingesetzt, welche zusammen einen Regelkreis bilden.

Es ist allgemein bekannt, dass eine gewisse Zeitdauer verstreicht, bis sich ein Regelkreis stabilisiert hat, d.h. bis der Beharrungszustand erreicht ist. Diese Zeitspanne weist je nach Komplexität eines jeweiligen Regelkreises eine mehr oder weniger lange Zeitdauer auf.

Während dieser Zeitspanne entspricht das die mehreren Komponenten aufweisende Erzeugnis üblicherweise nicht der vorgegebenen Güte und muss demgemäss als Abfall beseitigt werden, welches für einen jeweiligen Betrieb einen mehr oder weniger grösseren Verlust bildet.

Die WO-A-8 603 235 zeigt eine Anlage zum Auswählen und Mischen verschiedener Farbstoffkomponenten zur Herstellung einer Farbflotte zum Färben von Textilien. Die Anlage enthält Speicherbehälter für die jeweiligen Farbstoffkomponenten. Diese Speicherbehälter stehen über Speiseleitungen, Dosiervorrichtungen und Umschaltventile mit dem Behälter zur Aufnahme der Farbstoffe in Verbindung. Von jeder Speiseleitung zweigt eine Rückführleitung zum entsprechenden Speicherbehälter ab, so dass bei Nichtgebrauch der jeweiligen Farbkomponente diese durch das Rückführen dauernd in Bewegung gehalten ist, um ein Entmischen dieser Farbkomponente zu verhindern. Durch die Dosiervorrichtungen werden jeweils die zur Herstellung eines jeweiligen Farbflottenbades notwendigen Mengen der einzelnen Farbstoffkomponenten dosiert, wobei jeweils eine Menge einer jeweiligen Farbstoffkomponente dosiert wird, jedoch nicht ein kontinuierlicher Mengenfluss. Die durch die Farbstoffkomponenten entstandene Farbflotte wird jedoch nicht hinsichtlich einer einwandfreien Vermischung und gegebenenfalls einem Entmischen durch z.B. Absetzen überprüft, so dass nicht mit Sicherheit eine einwandfreie Färbung der Textilien erfolgen wird.

Im Aufsatz von R. Mayer "If you're looking for flexibility, this blending has it" der Zeitschrift "Instruments & Control Systems", Vol. 49, Nr. 10, Oktober 1976, Seiten 24-30, Radnor, USA, ist eine Mischanlage zum Mischen und Ausgeben von flüssigen Mineralölprodukten und Zusätzen offenbart. Bei dieser Anlage wird wieder lediglich volumenmässig und zeitunabhängig gemischt, eine Rückführung von nicht abgegebenen Komponenten im geschlossenen Kreislauf ist nicht vorgesehen und schliesslich erfolgt keine Ueberprüfung des abgegebenen Gemisches betreffs der erwünschten Eigenschaften des Gemisches.

Die FR-A-2 224 808 offenbart ein Mischverfahren und eine Mess- und Steueranlage für flüssige Mineralölprodukte. Irgendwelche Rückführungen von Mischkomponenten sind nicht vorgesehen. Weiter wird der Mengenfluss der einzelnen Komponenten nicht gemessen und entsprechend geregelt. Die Regelung erfolgt ausschliesslich durch ein Abtasten des Gemisches, wobei keine Vorkehrungen vorhanden sind, bei Festellen eines fehlerhaften Gemisches die Zufuhr sämtlicher Mischkomponenten zu unterbrechen und im geschlossenen Kreislauf zu führen, so dass es ohne weiteres möglich ist, dass das Gemisch zeitweilig fehlerhaft sein kann.

Die US-A-4 209 258 offenbart eine computergesteuerte Mischvorrichtung für Komponenten zur Herstellung eines Kunststoffproduktes. Dabei werden lediglich Daten der einzelnen Komponenten, z.B. Mengenfluss, Temperatur, etc. abgetastet und die einzelnen Komponenten geregelt. Eine Rückführung einer jeweiligen Komponente und Ueberwachung des Endproduktes, d.h. Gemisches, sind ebenfalls nicht vorgesehen.

Hier will die Erfindung Abhilfe schaffen. Die Erfindung, wie sie in den Ansprüchen gekennzeichnet ist, löst die Aufgabe, ein Verfahren zur kontinuierlichen Herstellung eines aus mindestens zwei Komponenten gebildeten Gemisches zu schaffen, bei dem die Komponenten so lange in einem geschlossenen Kreislauf zu ihren Lagerbehältern zurückgeführt werden, bis der Ist-Wert des Mengenstromes jeder einzelnen Komponente seinem Soll-Wert entspricht.

Die durch die Erfindung erreichten Vorteile sind im wesentlichen darin zu sehen, dass während dem Anlaufbetrieb einer nach diesem Verfahren arbeitenden Anlage, auch nach kurzzeitigen Unterbrüchen, kein Gemisch erzeugt wird, dass den vorgegebenen Werten nicht entspricht und als Abfallprodukt verlustbehaftet abgeführt werden muss.

Im folgenden wird die Erfindung anhand von lediglich einen Ausführungsweg darstellenden Zeichnungen näher erläutert.

Es zeigt:
Figur 1 ein Produktionsdiagramm bekannter Anlagen,
Figur 2 ein Produktionsdiagramm einer nach dem erfindungsgemässen Verfahren betriebenen Anlage, und
Figur 3 schematisch eine Vorrichtung zur Durchführung des Verfahrens.

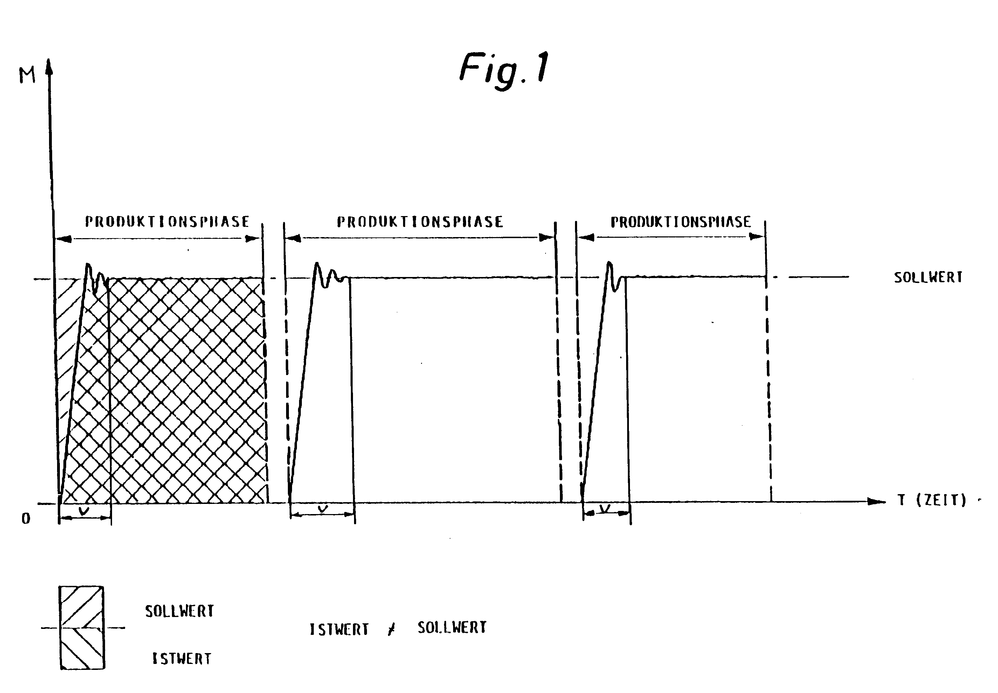

Die Figur 1 zeigt das Produktionsdiagramm gemäss den bekannten Verfahren. Dabei bezeichnet M den Mengenfluss und T die Zeit. Das Ziel ist nun den Soll-Wert in einem stabilen Zustand zu erreichen. Beim Punkt 0 wird die Anlage in Betrieb gesetzt, wobei der Mengenfluss von 0 zunimmt und den Soll-Wert erreichen soll, d.h. den Zustand erreichen, bei dem der Ist-Wert gleich dem Soll-Wert (innerhalb offensichtlich den gesetzten Toleranzen) ist. Bis der Beharrungszustand erreicht ist, verstreicht die Zeitspanne v. Bei den bekannten Anlagen bzw. bekannten Verfahren werden nun die einzelnen Komponentenströme bereits während dieser Zeitspanne v zusammengeführt, vermischt, wobei das Produkt offensichtlich nicht die festgelegte Zusammensetzung aufweist. Dieses Produkt ist jedoch nicht verwendbar, d.h. bei z.B. der Nahrungsmittel- oder Genussmittelindustrie kann man das erhaltene Gemisch noch nicht in ein Gebinde, eine Dose bzw. eine Flasche abfüllen. Vielmehr muss dieses nicht die erforderliche Güte aufweisende Gemisch als Abfall beseitigt werden.

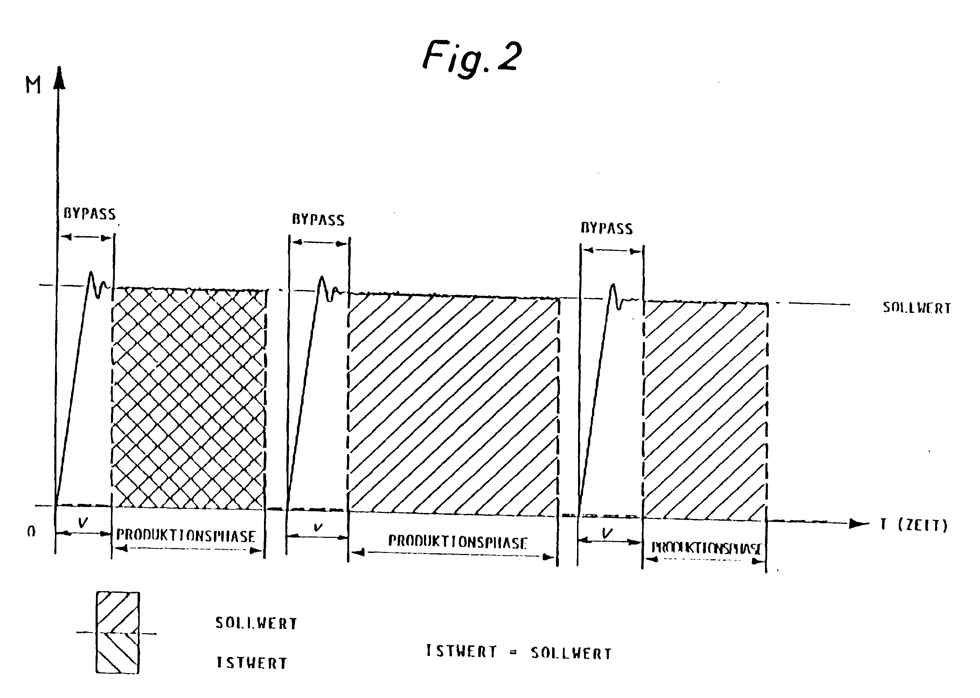

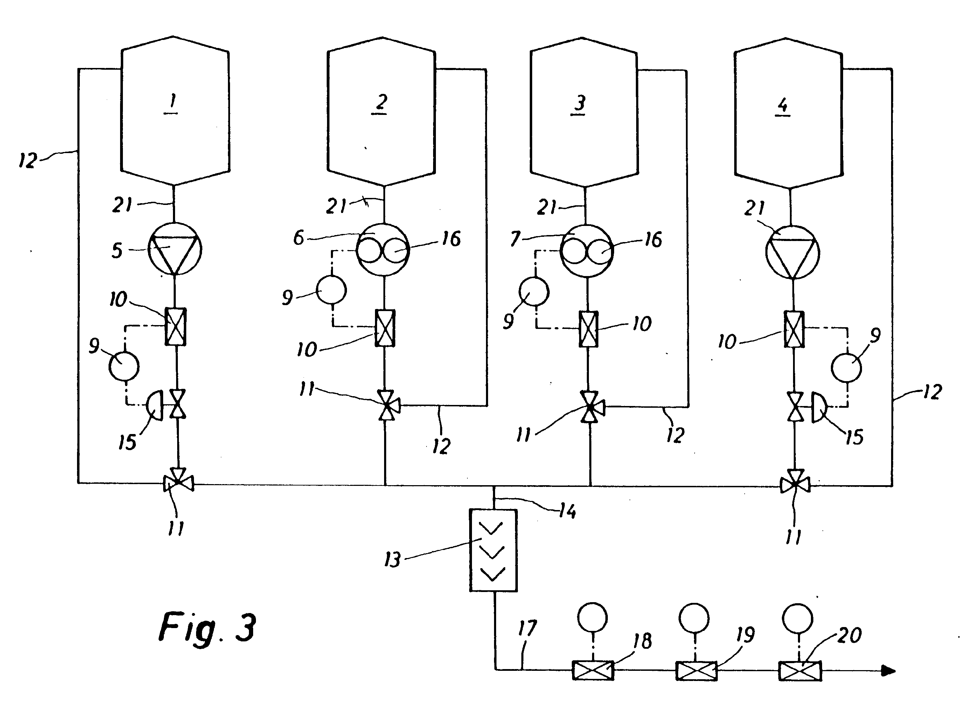

Es wird nun auf die Figuren 2 und 3 verwiesen. Die Figur 3 zeigt eine Anlage, bei der vier Komponenten zur Erzeugung eines Gemisches miteinander vermischt werden. Die Bezugsziffern 1-4 bezeichnen jeweils einen Lagerbehälter für eine Komponente. Es sei beispielsweise angenommen, dass im Lagerbehälter 1 eine Zuckerlösung, im Lagerbehälter 2 ein erstes Konzentrat, im Lagerbehälter 3 ein zweites Konzentrat und im Lagerbehälter 4 Wasser vorhanden ist. Das im Lagerbehälter 1 vorhandene Gut strömt durch die Entnahmeleitung 21 zu einer Fördereinrichtung 5. Es ist oben die Angabe gemacht worden, dass beispielsweise im Lagerbehälter 1 eine Zuckerlösung vorhanden ist. Entsprechend weist die Fördereinrichtung 5 eine Strömungsmaschine bzw. eine Zentrifugalpumpe auf. Die durch diese Fördereinrichtung 5 gepumpte Menge des Gutes strömt darauf durch einen Durchflussmesser 10, der den Mengenstrom misst. Dieser Durchflussmesser 10 ist mit einem Regler 9 verbunden, der seinerseits ein Steuerventil 15 steuert, mittels welchem Steuerventil 15 der aus dem Behälter 1 ausströmende und die Pumpe 5 geförderte Mengenstrom gesteuert wird, mit dem Ziel, den beim Durchflussmesser 10 abgetasteten Ist-Wert über den Regler 9 auf den Soll-Wert zu steuern.

Nach dem Steuerventil 15 ist ein Umschaltventil 11 vorhanden. Dieses Umschaltventil 11 ist in zwei Stellungen steuerbar. In der einen Stellung verbindet sie die Entnahmeleitung 21 nach dem Steuerventil 15 mit einer Rückführleitung 12, durch welche das Gut in den Lagerbehälter zurückströmen kann.

Steht das Umschaltventil 11 in einer zweiten Stellung, strömt das Gut durch die Speiseleitung 14 zu einem statischen Mischer 13.

Der Ausfluss aus den Lagerbehältern 2-4 wird in derselben Weise gefördert und gesteuert. Jedoch ist hier die Annahme gemacht, dass die Konzentrate der Lagerbehälter 2 und 3 hochviskose Stoffe sind, so dass die Fördereinrichtung beim Lagerbehälter 2 eine Verdrängungspumpe 7 enthält. Diese Pumpen 6, 7 sind beispielsweise Zahnradpumpen. Entsprechend wird der beim Durchflussmesser 10 ermittelte Mengenstrom über den jeweiligen Regler 9 gesteuert, indem dieser auf den Drehzahlregler der Zahnradpumpe 6, 7 einwirkt.

Auch in diesen drei Strängen ist jeweils ein Umschaltventil 11 vorhanden, mittels welchem das geförderte Gut entweder über die Rückführleitung 12 zurück zum jeweiligen Lagerbehälter oder zur Speiseleitung 14 gesteuert wird, welche Speiseleitung 14 mit dem Mischer 13 verbunden ist, der in der gezeichneten Ausführung ein statischer Mischer ist. Vom statischer Mischer 13 führt eine Ausgangsleitung 17 weg, an welcher weitere Messglieder angeordnet sind, hier beispielsweise mit den Bezugsziffern 18, 19 und 20 bezeichnet. Die Ausgangsleitung 17 führt schlussendlich beispielsweise zu einem Abfüllapparat, der z.B. ein Flaschenabfüllapparat sein kann.

Wird nun zum Anfahren die Anlage eingeschaltet, stehen die Umschaltventile 11 in derjenigen Stellung, gemäss welchen das aus den Lagerbehältern 1-4 entnommene Gut über die Rückführleitungen 12 zurückgeführt wird. Dieser Rückführbetrieb wird nun für jede einzelne Komponente so lange aufrecht erhalten, bis sich die einzelnen Regelkreise, also hier die vier Regelkreise, stabilisiert haben und die durch die Durchflussmesser 10 ermittelten Ist-Werte den für das jeweilige Endprodukt entsprechenden Soll-Werten (innerhalb der tolerierbaren Grenzen) entspricht. Nachdem sämtliche Regelkreise stabil worden sind, werden alle vier Umschaltventile 11 umgeschaltet, so dass nun die Komponenten durch die Speiseleitung 14 zum Mischer 13 strömen. Es muss ausdrücklich bemerkt werden, dass die Voraussetzung ist, dass alle vier Regelkreise stabil geworden sind. In anderen Worten, wenn beispielsweise beim hochviskosen Konzentrat vom Lagerbehälter 2 eine grössere Zeitspanne bis zur Stabilisierung des Regelkreises als bei den anderen Komponenten notwendig ist, werden die anderen Komponenten, obwohl deren Regelkreis sich bereits stabilisiert hat, immer noch durch die Rückführleitungen 12 in die Lagerbehälter zurückgeführt und erst, wenn auch der letzte Regelkreis stabil geworden ist, erfolgt das Umschalten der Umschaltventile 11.

Zu bemerken ist, dass der Umschaltvorgang der Umschaltventile 11 die Stabilität der Regelkreise in keiner Weise beeinflussen und stören kann, da alle entsprechenden Teile, d.h. Pumpen, Durchflussmesser, Regelventile, Regler usw., welche zusammen die jeweiligen Regelkreise bilden, durch diesen Umschaltvorgang nicht mehr beeinflusst werden, da lediglich die Durchflussrichtung geändert wird. Dieses Umschalten wird also nicht mehr als Störung im Regelkreis wahrgenommen und die Mischungsanteile der einzelnen, das schlussendliche Erzeugnis ausmachenden Komponenten weist unverzüglich die gewünschten Werte auf.

Die einzelnen Komponenten strömen mit dem nunmehr genau geregelten Mengenfluss durch die Speiseleitung 14 zum Mischer 13, der hier ein statischer Mischer ist und je nach Enderzeugnis in bekannter Weise unterschiedlich aufgebaut sein kann.

Nach dem Mischer werden durch die Messglieder 18, 19 und 20 verschiedene Eigenschaften, Parameter des Erzeugnisses gemessen, angezeigt und auch registriert. Es wird noch weiter unten näher auf diese Messglieder eingegangen.

Sobald nach Erreichen des stabilen Zustandes der Regelkreise, also wenn die einzelnen Komponenten durch die Speiseleitung 14 dem Mischer 13 zugeführt werden, durch irgend einen der Durchflussmesser 10 eine nicht mehr tolerierbare Abweichung festgestellt wird, schalten die Umschaltventile 11 unverzüglich wieder auf Rückführung, so dass alle Komponenten, auch diejenigen, deren Mengenfluss dem Soll-Wert entspricht, wieder im Kreislauf zu den Lagerbehältern 1-4 zurückgeführt werden. Dieser Vorgang dauert wiederum so lange, bis sich der einzelne Regelkreis, bei dem eine Abweichung ermittelt worden ist, wieder auf den Soll-Wert eingependelt hat. Danach wird wieder umgeschaltet und die Komponenten zur weiteren Produktion dem Mischer 13 zugeführt.

Bei den Messgliedern 18, 19, 20 wird nun ermittelt, ob das Endprodukt vor dem beispielsweisen Abfüllen in die Flaschen tatsächlich die produktegemässen Charakteristiken aufweist (beispielsweise Konzentration, pH-Wert, Azidität, Viskosität, Säure-Zuckergehalt, Alkohol etc.). Es wird also eine Kontrolle des erzeugten, gemischten Produktes durchgeführt. Als Beispiel sei hier angenommen, dass beim Messglied 18 die Dichte, beim Messglied 19 die Azidität und beim Messglied 20 die Konzentration des Gemisches ermittelt werden. Wird nun bei einem der Messglieder 18-20 eine Abweichung von den vorgegebenen Werten festgestellt, werden die Umschaltventile 11 wiederum auf Rückführung geschaltet (obwohl die einzelnen Mengenströme gemäss den Durchflussmessern 10 den Soll-Werten entsprechen). Gleichzeitig wird ein Alarm gegeben, so dass eine Bedienungsperson die Anlage auf Defekte überprüfen kann. Es können hier mehrere Gründe für einen solchen Fall vorliegen, beispielsweise ist ein falsches Rezept für das Getränk, eine falsche Wahl der einzelnen Komponenten oder es könnten auch bei Messgeräten Defekte aufgetreten sein. Durch diese Nachkontrolle ist es somit unmöglich, dass das Produkt nicht den vorgegebenen Vorschriften entspricht. Vergleicht man nun das Verfahren gemäss der Figur 3, wozu auf die Figur 2 verwiesen wird, mit dem bekannten Verfahren, ergibt sich folgender bedeutender Vorteil.

Gemäss der Darstellung in der Figur 1 wird während der zeitspanne v bis zur Stabilisierung aller Regelkreise das jeweilige Gemisch als Verlust der Produktion als Abfall beseitigt. Gemäss der Figur 2 nun werden die Mengenströme der einzelnen Komponenten während der Zeitdauer v nicht der Beseitigung zugeführt, sondern über den Bypass, der Rückführleitung 12, wieder den Lagerbehältern zurückgeführt, so dass hier kein Verlust auftreten kann. Es darf nicht vergessen werden, dass in einem Produktionsbetrieb nach dem Mischer 13 die Ausgangsleitung 17 zu Abfüllanlagen führt, beispielsweise Flaschenabfüllapparaten. Hier können natürlich auch immer wieder Störungen oder irgendwelche Unterbrüche des Betriebes entstehen, so dass die Mischanlage auf "Leerlaufbetrieb" geschaltet werden muss. Ist eine jeweilige Störung behoben, muss wieder diese Anlage angefahren werden, wobei bei den bekannten Anlagen wieder die erwähnten Verluste auftreten, jedoch bei einer gemäss der vorliegenden Erfindung ausgebildeten Anlage kein Verlust der einzelnen Komponenten auftritt. Betriebsunterbrüche bei den Abfüllanlagen können während dem Ablauf eines Arbeitstages mehrere Male auftreten, es müssen nicht unbedingt Störungen sein, der Grund könnte beispielsweise lediglich darin liegen, dass z.B. die Zufuhr der Flaschen kurzzeitig unterbrochen wird, weil irgendwelche Zuförderung unregelmässig ist, weil eine Flaschenspülanlage für Betriebsunterbrüche verantwortlich ist, etc.

Dadurch, dass bei der gezeigten Ausführung einerseits der jeweilige Mengenstrom der Komponenten gemessen und erst dann gemischt wird, wenn sämtliche Ist-Werte den Soll-Werten entsprechen und weiter das Gemisch nochmals analysiert wird und auch hier, wenn ein Ist-Wert nicht seinem Soll-Wert entspricht, auf Rückführung (Leitung 12) umgeschaltet wird, kann sich kein Produktverlust ergeben und somit lässt sich eine grosse Ausbeute bei der Produktion erzielen. Weiter ist eine gemäss des erfindungsgemässen Verfahrens betriebene Anlage einfach zu betreiben und offensichtlich kann sich ein sehr hoher Qualitätsstandard des endgültigen Produktes ergeben.

## Patentansprüche

1. Verfahren zur kontinuierlichen Herstellung eines aus mindestens zwei Komponenten gebildeten, fliessfähigen Gemisches, bei dem jede Komponente aus einem Lagerbehälter zugeführt und danach alle Komponenten miteinander vermischt werden, wobei der Ist-Wert des aus einem jeweiligen Lagerbehälter geförderten Mengenstromes jeder Komponente gemessen und mit einem jeweiligen Soll-Wert verglichen wird, sämtliche aus ihrem jeweiligen Behälter geförderten Komponenten im geschlossenen Kreislauf so lange wieder zu ihrem Lagerbehälter zurückgeführt werden, bis der Ist-Wert jedes einzelnen Mengenstromes seinem Soll-Wert entspricht, und sobald jeder einzelne Ist-Wert dem jeweiligen Soll-Wert entspricht, die einzelnen Komponenten miteinander zugeführt und miteinander vermischt werden, dadurch gekennzeichnet, dass das Gemisch ein Nahrungs- oder Genussmittelgemisch ist und nach dem Vermischen der Komponenten die Eigenschaften des aus den verschiedenen Komponenten gebildeten Gemisches kontinuierlich gemessen bzw. analysiert werden, und dass bei jeglicher Abweichung mindestens eines der analysierten IstWerte vom entsprechenden Analysen-Soll-Wert das gegenseitige Zuführen und Mischen der aus den Behältern zugeführten Komponenten unterbrochen und der geschlossene Kreislauf der einzelnen Komponenten zurück zum jeweiligen Lagerbehälter erstellt und solange aufrecht erhalten wird, bis wieder jeder einzelne Ist-Wert des jeweiligen Mengenflusses dem entsprechenden Soll-Wert entspricht.

2. Vorrichtung zur Durchführung des Verfahrens nach Anspruch 1, mit einer Anzahl Lagerbehälter (1-4) für die jeweiligen Komponenten, wobei an jedem Lagerbehälter (1-4) eine Entnahmeleitung (21) und aufeinanderfolgend eine Fördereinrichtung (5-8) mit einer Strömungsmaschine (5; 8) oder mit einer drehzahlgeregelten Verdrängungspumpe (6; 7), ein mit einem Regler (9) verbundener Durchflussmesser (10) und ein Umschaltventil (11) anschliesst, welches Umschaltventil (11) einerseits mit einer Rückführleitung (12) zum jeweiligen Lagerbehälter (1-4) und andererseits mit einer zu einem gemeinsamen Komponenten-Mischer (13) führenden Speiseleitung (14) verbunden ist und zwischen zwei Stellungen schaltbar ist, wobei in einer ersten Stellung das Umschaltventil (11) eine Verbindung zwischen der Entnahmeleitung (21) und der Rückführleitung (12) und in einer zweiten Stellung eine Verbindung zwischen der Entnahmeleitung (21) und der Speiseleitung (14) bewirkt, und wobei Mittel (15; 16) zum Steuern der Durchflussmenge angeordnet sind, wobei im Falle einer Strömungsmaschine (5; 8) die Mittel zum Steuern der Durchflussmenge ein vom Regler (9) gesteuertes Regelventil (15), und im Falle einer drehzahlgeregelten Verdrängungspumpe (6; 7) die Mittel zum Steuern der Durchflussmenge einen vom Regler (9) gesteuerten Drehzahlregler (16) der Verdrängungspumpe (6; 7) aufweisen, dadurch gekennzeichnet, dass an der Ausgangsleitung (17) vom Komponenten-Mischer (13) Messglieder (18; 19; 20) angeordnet sind, welche dazu dienen, ein Messen und Analysieren des endgültigen Gemisches zu erlauben, welche Messglieder (18; 19; 20) mit den Umschaltventilen (11) verbunden sind, um bei einer Abweichung eines jeweiligen Ist-Wertes von einem jeweiligen Soll-Wert ein Umschalteen aller Umschaltventile (11) in die erste Stellung zu bewirken.

## Claims

1. Process for a continuous production of a flowable mixture composed of at least two components, in which each component is fed from a storage tank and thereafter all components are mixed together, whereby the actual value of the mass flow of each component conveyed out of a respective storage tank is measured and compared with a respective rated value, all components conveyed out of their respective tank are recirculated in a closed circuit again back into their storage tank until the actual value corresponds to the respective rated value the individual components are fed to each other and mixed among each other, characterized in that the mixture is a mixture of an article of food or luxury, and after the mixing of the components, the properties of the mixture formed by the various components are continuously measured or analyzed, resp., and that at any deviation of at least one of the analyzed actual values from the corresponding analysis-rated value the mutual feeding an mixing of the components conveyed out of the containers is interrupted and the closed circuit of the individual components back to the respective storage tank is established and maintained until again every single actual value of the respective mass flow corresponds to the corresponding rated value.

2. Device for the practicing of the process of claim 1, with a number of storage tanks (1-4) for the respective components, whereby each storage tank (1-4) is followed by an extraction conduit (21) and consecutively a feeding device (5-8) with a fluid flow engine (5; 8) or a speed controlled positive displacement pump (6; 7), a flow meter (10) coupled to a controller (9) and a switch-over valve (11), which switch-over valve (11) is coupled at the one side to a return line (12) to the respective storage tank (1-4) and at the other side to a feed line (14) leading to a common component-mixer (13) and is switcheable between two positions, whereby in a first position the switch-over valve (11) causes a communication between the extraction conduit (21) and the return line (12) and in a second position a communication between the extraction conduit (21) and the feed line (14), and whereby means (15;16) for a controlling of the flow rate are present, whereby in case of a fluid flow engine (5;8) the means for a controlling of the through flow comprise a control valve (15) controlled by the controller (9), and in case of a speed controlled positive displacement pump (6;7) the means for a controlling of the flow rate a speed controller (16) of the positive displacement pump (6;7) controlled by the controller (9), characterized in that measuring members (18;19;20) are arranged at the outflow conduit (17) of the component mixer (13) which serve to allow a measuring and analyzing of the final mixture, which measuring members (18;19;20) are connected to the switch-over valves (11) in order to cause in case of a deviation of a respective actual value from a respective rated value a switching of all switch-over values (11) into the first position.

## Revendications

1. Procédé pour produire de manière continue un mélange fluidisable d'au moins deux composants dont chacun est issu d'un réservoir, tous les composants étant ensuite mélangés, la valeur réelle du débit de chaque composant issu de son réservoir étant mesurée et comparée à une valeur de consigne correspondante, chaque composant issu de son réservoir particulier y étant ramené en circuit fermé jusqu'à ce que la valeur réelle de chaque débit individuel corresponde à sa valeur de consigne, les composants individuels étant réunis et mutuellement mélangés dès que chaque débit correspond à sa valeur de consigne, caractérisé en ce que le mélange est un mélange alimentaire ou stimulant, et que les caractéristiques du mélange formé par les différents composants sont mesurées, respectivement analysées de manière continue et que lorsqu'au moins un des résultats d'analyse diffère de sa valeur de consigne l'on interrompt la réunion et le mélange mutuel des composants issus de leurs réservoirs respectifs, l'on rétablit le retour en circuit fermé de chaque composant vers son propre réservoir et que l'on maintient cet état de choses jusqu'à ce que la valeur réelle de chaque débit particulier corresponde à la valeur de consigne correspondante.

2. Dispositif pour la réalisation du procédé selon la revendication 1, avec des réservoirs (1-4) pour les différents composants, chaque réservoir (1-4) étant relié à une conduite de sortie (21) et, successivement, à un dispositif d'entraînement (5-8) comportant un appareil de circulation (5; 8) ou une pompe volumétrique (6; 7) dont le nombre de tours est réglable, à un fluxmètre (10) connecté à un régulateur (9), et à une valve directionnelle (11) à deux positions, elle-même reliée d'une part à une conduite de retour (12) menant au réservoir correspondant (1-4) et d'autre part à une conduite d'alimentation (14) menant à un mélangeur de composants (13) commun, cette valve (11) connectant en sa première position la conduite de sortie (21) avec la conduite de retour (12) et connectant en sa seconde position la conduite de sortie (21) avec la conduite d'alimentation (14), des moyens (15;16) pour régler le débit étant prévus, ces moyens consistant en une valve régulatrice (15) commandée par le régulateur (9) dans le cas d'un appareil de circulation (5; 8), ou en une unité (16) commandée par le régulateur (9) et déterminant le nombre de tours de la pompe volumétrique (6; 7) dans le cas d'une telle pompe, caractérisé en ce que des appareils de mesure (18;19;20) sont disposés sur la conduite de sortie (17) du mélangeur de composants (13) pour mesurer et analyser le mélange final, ces appareils (18;19;20) étant connectés aux valves directionnelles (11) pour amener toutes les valves directionnelles (11) en leur première position lorsqu'une valeur réelle diffère de sa valeur de consigne.
